# EUROPEAN PATENT APPLICATION

(11) **EP 4 475 007 A1**
(43) Date of publication of application: **11.12.2024**
(21) Application number: 22929646.2
(22) Date of filing: 16.12.2022
(51) Int. Cl.: G06F 16/71

(54) **TARGET RETRIEVAL METHOD AND DEVICE, AND STORAGE MEDIUM**

(30) Priority: 02.03.2022 CN 202210194755
(71) Applicant: Zhejiang Uniview Technologies Co., Ltd., Hangzhou, Zhejiang 310051 (CN)
(72) Inventor: ZHOU, Di, Hangzhou, Zhejiang 310051 (CN); WANG, Weijie, Hangzhou, Zhejiang 310051 (CN); XU, Aihua, Hangzhou, Zhejiang 310051 (CN); WANG, Pengjun, Hangzhou, Zhejiang 310051 (CN); XIE, Xiaohong, Hangzhou, Zhejiang 310051 (CN); SONG, Minte, Hangzhou, Zhejiang 310051 (CN); NIU, Chunyong, Hangzhou, Zhejiang 310051 (CN)
(74) Representative: HGF
(86) International application number: PCT/CN2022/139508
(87) International publication number: WO 2023/165219

(57) **Abstract**

Provided are a target retrieval method and device, and a storage medium. The target retrieval method includes acquiring structured feature information that is input when information retrieval is performed on a preset information retrieval database; acquiring the totality of semi-structured feature information within a first preset period and a first preset range from the information retrieval database according to time information and range information contained in the input structured feature information and using the semi-structured feature information as to-be-retrieved thermal data; acquiring real-time video streams of the complete set of cameras within a second preset period and a second preset range; acquiring semi-structured feature information of a potential target in the real-time video streams; and comparing the semi-structured feature information of the potential target with the semi-structured feature information in the thermal data and determining whether the potential target is a retrieval target according to the comparison result.

## Description

This application claims priority to Chinese patent application No.202210194755.4 filed with China National Intellectual Property Administration (CNIPA) on Mar. 2, 2022, the disclosure of which is incorporated herein by reference in its entirety.

### TECHNICAL FIELD

The present application relates to the field of image retrieval technology, for example, a target retrieval method and device, and a storage medium.

### BACKGROUND

In a personnel search process, an information provider is generally capable of providing partial structured information about a specific target person, such as whether the specific target person wears glasses, the gender, the approximate age, and other structured information. Then, the relevant technical personnel searches a historical database for information on the activity time and area of the specific target person according to the structured information. At the same time, the relevant technical personnel pays close attention to the real-time video images acquired by cameras in the relevant area and take relevant measures against the specific target person in a timely manner once the specific target person is identified. This process is labor-intensive and inefficient.

### SUMMARY

The present application provides a target retrieval method and device and a storage medium, which can reduce labor consumption and improve retrieval efficiency.

The present application provides a target retrieval method including the steps below.

Structured feature information that is input when information retrieval is performed on a preset information retrieval database is acquired. Semi-structured feature information within a first preset period and a first preset range is acquired from the information retrieval database according to time information and range information contained in the input structured feature information and is used as to-be-retrieved thermal data. A real-time video stream of a camera within a second preset period and a second preset range is acquired. Semi-structured feature information of a potential target in the real-time video stream is acquired. The semi-structured feature information of the potential target is compared with the semi-structured feature information in the thermal data. Whether the potential target is a retrieval target is determined according to a comparison result.

The present application also provides a target retrieval device. The device includes a processor and a computer-readable storage medium. The computer-readable storage medium stores instructions. When being executed by the processor, the instructions perform the target retrieval method.

The present application provides a computer-readable storage medium. The computer-readable storage medium stores at least one program. When being executed by at least one processor, the at least one program performs the target retrieval method.

### BRIEF DESCRIPTION OF DRAWINGS

FIG. 1 is a flowchart of a target retrieval method according to some embodiments of the present application.
FIG. 2 is a flowchart of a method for acquiring an information retrieval database in advance according to some embodiments of the present application.
FIG. 3 is a flowchart of a method for acquiring semi-structured feature information within a first preset period and a first preset range from an information retrieval database according to time information and range information contained in first structured feature information according to some embodiments of the present application.
FIG. 4 is a flowchart of a method for comparing semi-structured feature information of a potential target with semi-structured feature information of thermal data and determining whether the potential target is a retrieval target according to a comparison result according to some embodiments of the present application.
FIG. 5 is a composition block diagram of a target retrieval device according to some embodiments of the present application.

### DETAILED DESCRIPTION

The present application describes multiple embodiments, but the description is exemplary.

In addition, when a representative embodiment is described, the specification presents the method and/or process as a specific sequence of steps. However, to the extent that the method or process does not depend on the sequence of steps described herein, the method or process should not be limited to the sequence of steps described. It is to be understood by those of ordinary skill in the art that other sequences of steps are possible.

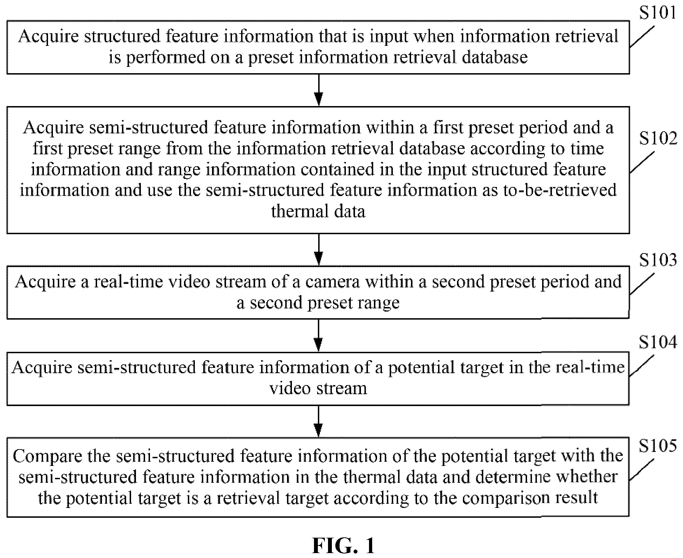

Some embodiments of the present application provide a target retrieval method. As shown in FIG. 1, the method includes steps S101 to S105.

In S 101, structured feature information that is input when information retrieval is performed on a preset information retrieval database is acquired.

In S102, semi-structured feature information within a first preset period and a first preset range is acquired from the information retrieval database according to time information and range information contained in the input structured feature information and is used as to-be-retrieved thermal data.

In S103, a real-time video stream of a camera within a second preset period and a second preset range is acquired.

In S 104, semi-structured feature information of a potential target in the real-time video stream is acquired.

In S105, the semi-structured feature information of the potential target is compared with the semi-structured feature information in the thermal data, and whether the potential target is a retrieval target is determined according to the comparison result.

In an example embodiment of the present application, the structured feature information and the semi-structured feature information are described below.

For an image feature, the semi-structured feature information refers to a set of data representing the image and extracted by an image recognition algorithm. These data are generally semi-structured data and used as the semi-structured feature information of the image, and less memory space is occupied than the original image. The similarity of two images is calculated by a matched comparison algorithm. The structured feature information refers to a clear target attribute, such as the color and the model of a car, whether a pedestrian wears glasses, the gender, and the clothing color.

A video acquired by a camera is recorded in a center server. The center server analyzes the people, vehicles, and objects that appear in a video image. First, the target in the image is positioned through machine vision, and then a corresponding feature vector is generated. For example, a deep neural network generates a feature vector corresponding to each face, and then multiple other neural networks identify structured attributes such as the gender, the age range, and whether a person wears glasses.

In the above analysis result, if comparison and early warning of a target person need to be performed by using real-time video data, semi-structured information such as the feature vector corresponding to a face is used for comparison, which is the most targeted and fastest. Other information needs to be combined, and the coverage is excessively large, and the pertinence is relatively weak. However, an information provider generally is merely capable of providing structured information, which makes real-time alerting difficult.

In this example embodiment of the present application, based on the preceding problems, in the solution of this embodiment of the present application, user requirements are perceived from the structured information input by the user during the retrieval. Combined with the result of the intelligent processing of a system, the structured retrieval information of the user is converted into semi-structured feature information and used as thermal data to be loaded into the thermal data memory cluster of a server. The semi-structured feature information of the target appearing in the real-time video from the camera is compared in real time, thereby implementing real-time alerting.

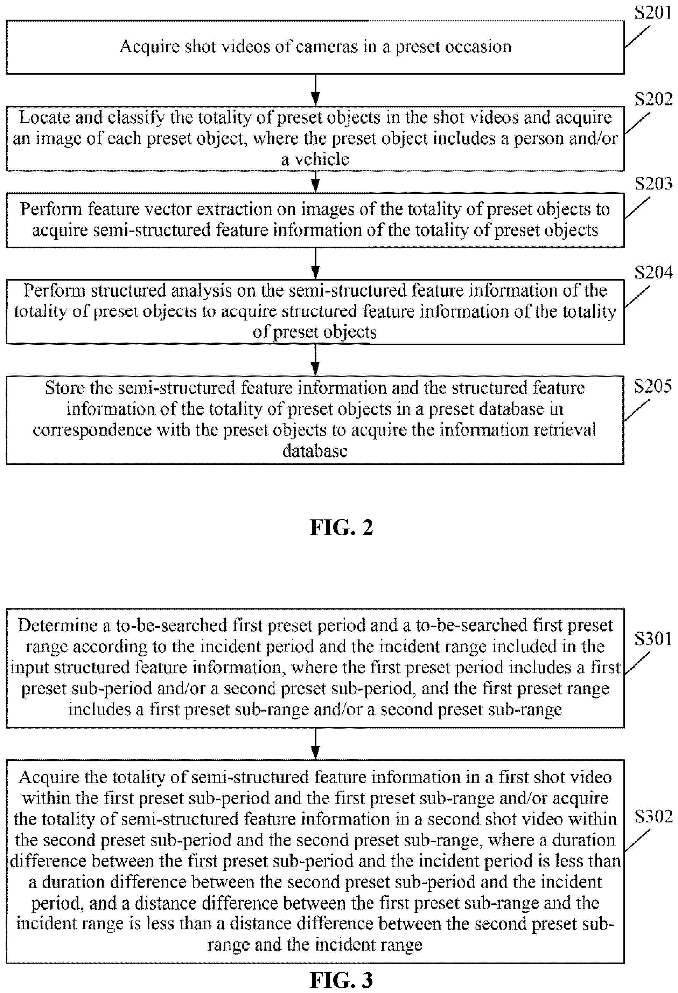

In this example embodiment of the present application, as shown in FIG. 2, a method for acquiring the information retrieval database in advance includes steps S201 to S205.

In S201, videos shot by the complete set of cameras in a preset occasion are acquired.

In S202, the totality of preset objects in the shot videos is positioned and classified, and the image of each preset object is acquired. The preset object includes a person and/or a vehicle.

In S203, feature vector extraction is performed on images of the totality of preset objects to acquire semi-structured feature information of the totality of preset objects.

In S204, structured analysis is performed on the semi-structured feature information of the totality of preset objects to acquire structured feature information of the totality of preset objects.

In S205, the semi-structured feature information and the structured feature information of the totality of preset objects are stored in a preset database in correspondence with the preset objects to acquire the information retrieval database.

In this example embodiment of the present application, the center server accesses shot videos of cameras from multiple public occasions, intelligently positions a preset object such as a person and/or vehicle appearing in a video image, and generates semi-structured feature information under a specific neural network model (that is, the preceding semi-structured feature information used as the thermal data). Structured analysis is performed on the semi-structured feature information of each preset object to generate structured feature information (that is, the structured feature information of the preceding preset object, which is also called attribute information). The semi-structured feature information and the structured feature information of each preset object are stored in a database, and the database is used as the information retrieval database.

In this example embodiment of the present application, the specific neural network model is a deep learning neural network model. The center server performs preset object detection and feature extraction on the video image through the deep learning neural network model. After the preset object of interest (such as a person and vehicle) appearing in the video image is positioned and classified, a corresponding feature vector (that is, semi-structured feature information) is extracted by the deep learning neural network model. The feature vector is generally a real number vector of 1 * 128 or 1 *256. Different feature vectors are obtained for different preset objects through embedding mapping of the deep learning neural network model. For a preset object appearing in a video image, for example, a pedestrian, in addition to generating the corresponding semi-structured feature information, structured attribute information is also generated, such as the gender, the age range, and whether the pedestrian wears glasses.

In this example embodiment of the present application, the semi-structured feature information generated by the deep learning neural network model is stored in Parquet files and partitioned by date. Massive amounts of structured attribute information (that is, structured feature information) are stored through HBase + ElasticSearch. ElasticSearch and Parquet files return RecordID. The RecordID is bidirectionally converted with the Rowkey of HBase.

In this example embodiment of the present application, for the original pictures of video images including multiple preset objects (including both motor vehicles and pedestrians), the file persistence operation of the Hadoop distributed file system (HDFS) is consistent with the above content. For each object image in a picture, a feature vector is extracted and stored. However, each feature vector is associated with the same RecordID of the original picture.

In this example embodiment of the present application, when the user uses structured attribute information to search the information retrieval database, the system analyzes the detection requirement of the user, searches for the related target semi-structured feature data within the specific time and a specific region from the information retrieval database, and uses these semi-structured data as thermal data.

In this example embodiment of the present application, when the user inputs attribute information for target retrieval, the attribute information is dynamically expanded based on the continuity feature and scenario characteristic of the attribute; thus, more reasonable thermal data is obtained from the information retrieval database.

In this example embodiment of the present application, the method also includes the steps below.

When the input structured feature information includes continuity feature information, the continuity feature information is expanded to acquire corresponding semi-structured feature information from the information retrieval database. The continuity feature information includes, but is not limited to any one or more of the following: the time, the range, and the age. When the input structured feature information includes environment-related feature information, the environment-related feature information is transformed and expanded according to actual environment information to acquire corresponding semi-structured feature information from the information retrieval database. The environment-related feature information includes, but is not limited to the color. When the input structured feature information includes inherently operable feature information, the inherently operable feature information is ignored or used as secondary search information to acquire corresponding semi-structured feature information from the information retrieval database. The inherently operable feature information includes, but is not limited to a license plate.

In this example embodiment of the present application, the above situations are described below respectively.

### 1. Related-object expansion based on the continuity feature of attribute information

In this example embodiment of the present application, in many cases, the information provided by the user for retrieval is not necessarily accurate, or there is no surveillance camera nearby in the time and space, such as the time point when an event occurs, the location where the event occurs, and the age. However, these attributes have continuity, and a potential target within an approximate range is obtained through expansion and fitting.

In this example embodiment of the present application, for example, when the user inputs the attribute information of "23:00" + "intersection of Changhe Road and South Ring Road" + "middle-aged" as the query criteria during retrieving, the time range is expanded to "22:00 - 24:00", the location range is expanded to "the area having the radius of 1 km centered on the intersection of Changhe Road and South Ring Road", and the age is expanded to "young, middle-aged, and middle-aged and elderly" (some people look younger or more mature). The system analyzes the detection requirement of the user, retrieves the target feature vector (thermal data) satisfying the preceding query criteria in the information retrieval database, and loads the semi-structured feature information into the thermal data memory cluster in a service area.

### 2. Related-object expansion based on the environmental impact of attribute information

In this example embodiment of the present application, the method also includes the following. When the input structured feature information includes the color of the retrieval target, and the color of the retrieval target is capable of being covered by the light color in the environment, environmental light color information of the totality of cameras is acquired, and the input color of the retrieval target is expanded to a primary color and a possible color according to a preset solution (when the environmental light color information changes over time, the set of possible colors is adjusted accordingly, or the weight of the color recognition result is weakened to avoid incorrect target recognition).

The semi-structured feature information of an image corresponding to the retrieved and expanded color of the retrieval target from the information retrieval database is used as the thermal data and added to a preset thermal data memory cluster.

In this example embodiment of the present application, in some cases, due to the influence of the environmental light, the attribute information (such as the color) of an object deviates. For example, a white vehicle under yellow light is incorrectly recognized as yellow by machine vision. The color attribute is changed or added based on the data of urban lighting to expand the search range.

In this example embodiment of the present application, for example, when the user enters "white" + "small car" + "23:00" + "intersection of Changhe Road and South Ring Road", the system finds that the street light at this location is yellow based on urban lighting data information. However, the lights within one kilometer include white and blue, then the car body color is expanded to "white or yellow or blue". The system analyzes the detection requirement of the user, retrieves the target feature vector (thermal data) satisfying the preceding query criteria, and loads the semi-structured feature information into the thermal data memory cluster in the service area.

### 3. Related-object expansion based on the inherently operable feature of attribute information

In this example embodiment of the present application, in some cases, a license plate is covered, smeared, or cloned, and such attribute information is used as a weak option during searching for objects so that the search range is expanded.

In this example embodiment of the present application, for example, if the user enters "license plate Zhe AXXXXX" + "white" + "small car", since there is a possibility of a cloned license plate and smearing, when the system retrieves an object, the license plate information is temporarily ignored, and then the secondary search is performed in the search result based on the license plate information, the semi-structured feature information of an object having the same license plate information is arranged in front, and the rest is arranged in the back. When the memory space of the thermal data memory cluster is insufficient, the top-ranked semi-structured feature information is loaded preferentially.

In this example embodiment of the present application, based on the continuity feature and environmental data of the attribute, and the attribute feature, the object search range is dynamically expanded, thereby obtaining more reasonable semi-structured feature information.

In this example embodiment of the present application, to enable thermal data to support faster retrieval efficiency (actual system storage records are usually hundreds of millions of massive data), a set of memory-based clusters is built to load thermal data in a distributed manner, which is referred to as a thermal data memory cluster. The acquired thermal data is loaded into the thermal data memory cluster in the service area.

In this example embodiment of the present application, when the user enters the attribute information of "middle-aged" + "male" + "wearing glasses" as the query criteria during retrieving, it means that the user cares about the person having the above features. The system analyzes the detection requirement of the user, retrieves the semi-structured feature vector (that is, semi-structured feature information used as thermal data) that satisfies the preceding query criteria in the information retrieval database, and loads these semi-structured feature information into the thermal data memory cluster in the service area. Considering that there are too many feature vectors that satisfy requirements, the retrieval time and space information are intelligently limited.

In this example embodiment of the present application, the first preset period includes an incident period and/or a pre-incident period. The first preset range includes an incident range and/or a range within a preset distance outside the incident range.

In this example embodiment of the present application, as shown in FIG. 3, acquiring the semi-structured feature information within the first preset period and the first preset range from the information retrieval database according to the time information and the range information contained in the input structured feature information includes steps S301 to S302.

In S301, a to-be-searched first preset period and a to-be-searched first preset range are determined according to the incident period and the incident range contained in the input structured feature information. The first preset period includes a first preset sub-period and/or a second preset sub-period. The first preset range includes a first preset sub-range and/or a second preset sub-range.

In S302, the totality of semi-structured feature information in a first shot video within the first preset sub-period and the first preset sub-range is acquired, and/or the totality of semi-structured feature information in a second shot video within the second preset sub-period and the second preset sub-range is acquired. The duration difference between the first preset sub-period and the incident period is less than the duration difference between the second preset sub-period and the incident period. The distance difference between the first preset sub-range and the incident range is less than the distance difference between the second preset sub-range and the incident range.

In this example embodiment of the present application, the simplest retrieval method is to input the information about the incident period (for example, the preceding first preset period, which also includes the pre-incident period) and load semi-structured feature information analyzed from videos shot by entire cameras within the possible activity radius of the retrieval target (for example, the preceding first preset range) into the thermal data memory cluster.

In this example embodiment of the present application, a finer retrieval method is that the system sets retrieval start time (for example, the first preset sub-period and the second preset sub-period) and a retrieval range (for example, the first preset sub-range and the second preset sub-range) for multiple cameras within the possible activity radius according to a time gradient, so that the retrieval start time of a camera close to the incident location approaches an incident time point, and the retrieval time increases as the radius increases.

In this example embodiment of the present application, for example, the incident occurs at A1 and time point T3, then the method for selecting the thermal data is as follows: A1 is used as the center, for the entire set of cameras within a radius of 1 km, the feature vector (that is, semi-structured feature information used as the thermal data) analyzed from shot videos within the period [T3, T3 + 1] (in hours) is selected; and A1 is used as the center, for the entire set of cameras within a radius of 1 km to 2 km, the feature vector (that is, semi-structured feature information used as the thermal data) analyzed from shot videos within the period [T3 + 1, T3 + 2] is selected, and so on. This is mainly considered minimizing the import of a non-associated feature vector into the thermal data memory cluster without losing the retrieval target, thereby reducing the calculation amount.

In this example embodiment of the present application, the thermal data is loaded into the preset thermal data memory cluster in the manners below.

From the thermal data of the latest date, the thermal data is loaded sequentially among multiple different cluster nodes in a polling manner until the entire set of cluster nodes is loaded up to an upper memory limit. Each cluster node has a unique corresponding node identifier. The serial numbers corresponding to the entire set of node identifiers increase sequentially. Moreover/Alternatively, after an image that is newly added to the information retrieval database and satisfies a shot video within the first preset period and the first preset range is added to the information retrieval database for first preset duration, the semi-structured feature information corresponding to the newly added image is loaded into the thermal data memory cluster. The first preset duration is a positive integer multiple λ of a time period T1 required from acquiring the newly added image to completing structuralization.

In this example embodiment of the present application, the replacement period W of the thermal data stored in the thermal data memory cluster satisfies that W = min(λT1, T2). T2 denotes the duration required by a cluster node in the thermal data memory cluster to load from zero memory to the upper memory limit.

In this example embodiment of the present application, the balanced distribution and non-duplicate writing of the thermal data among the multiple cluster nodes of the thermal data memory cluster are crucial for the efficient operation of memory resources and retrieval. Thus, before the thermal data is loaded into the thermal data memory cluster, each thermal data memory cluster is configured to include multiple distributed cluster nodes. Each cluster node has a node identifier (NodeID). NodelD is a unique serial number incrementally enumerated starting from zero in the thermal data memory cluster. The total number of nodes in the thermal data memory cluster is NodeNum. For the generated thermal data, according to the principle of loading the latest data first, each cluster node starts loading the feature vector (that is, the semi-structuralized feature information used as the thermal data) from the latest date. For the loading process, loading is performed sequentially among multiple different cluster nodes in a polling manner, that is, loading starts from the latest data, and a certain amount of thermal data is loaded into each cluster node in sequence, which is executed according to the following calculation rule: RecordID%NodeNum == NodeID of the current cluster node. RecordID denotes the recorded keywords. % denotes taking the remainder.

In this example embodiment of the present application, to prevent the memory data of each cluster node from exceeding a preset specification, during loading, the number of data entries is the preset specification minus the number of entries of the latest thermal data actually loaded into the memory.

In this example embodiment of the present application, the preceding operations enable the thermal data that satisfies the criteria to be loaded into the thermal data memory cluster, and the data of the preset specification is evenly distributed among multiple cluster nodes without duplication. During the update process of the thermal data in the thermal data memory cluster, according to the calculation performance of the server, after duration λT1, a new feature vector (that is, the semi-structured feature information used as the thermal data) generated based on the criteria according to the structured data is considered to be loaded into the thermal data memory cluster. The value of λ needs to take into account the impact of memory swapping in and out. T1 is the time period required for numerous real-time received video images from acquisition to completion of structuring. λ is a preset positive integer.

In this example embodiment of the present application, the image data of a real-time shot video cannot be deferred until the next memory loading period of the thermal data memory cluster for retrieval. Thus, the received image data of the shot video is placed in the preset memory of the thermal data memory cluster and compared with the thermal data at regular intervals (for example, 2 minutes) to perform target detection. If the thermal data stored in the memory of a cluster node reaches the upper memory limit, the global memory cleanup is initiated to clear the oldest data out of the memory according to data generation time. The duration for a cluster node to be loaded to the memory reaching the upper capacity limit is T2.

In this example embodiment of the present application, the replacement period W of the thermal data is equal to min(λT1, T2). The more frequently the thermal data is replaced and loaded, the higher the proportion of feature vectors in the thermal data memory cluster that satisfy the criteria is, but the greater the impact of memory swapping in and out is.

In this example embodiment of the present application, the freshness of the thermal data is maintained through the life cycle management of the thermal data in the thermal data memory cluster so that the thermal data in the thermal data memory cluster dynamically reflects retrieval requirements and the latest real-time data.

In this example embodiment of the present application, the semi-structured feature information of a potential target in the real-time video stream is acquired in the manners below.

The potential target in the real-time video stream is positioned, and the image of each potential target is acquired. The potential target includes a person and/or a vehicle. Feature vector extraction is performed on the image of the potential target, and the semi-structured feature information of the potential target is acquired.

In this example embodiment of the present application, the server analyzes the real-time video stream (for example, the real-time video streams of cameras within the second preset period and the second preset range) from cameras within a related period and range in real time, generate the semi-structured feature information (that is, the semi-structured feature information of the potential target) under a specific neural network model, and compare the semi-structured feature information with the thermal data (that is, the semi-structured feature information) in the thermal data memory cluster. When it is determined that the potential target and the retrieval target are the same, an alarm is sent to a management platform client.

In this example embodiment of the present application, the second preset period is a post-incident period, and the second preset range is the incident range and a range within a preset distance outside the incident range.

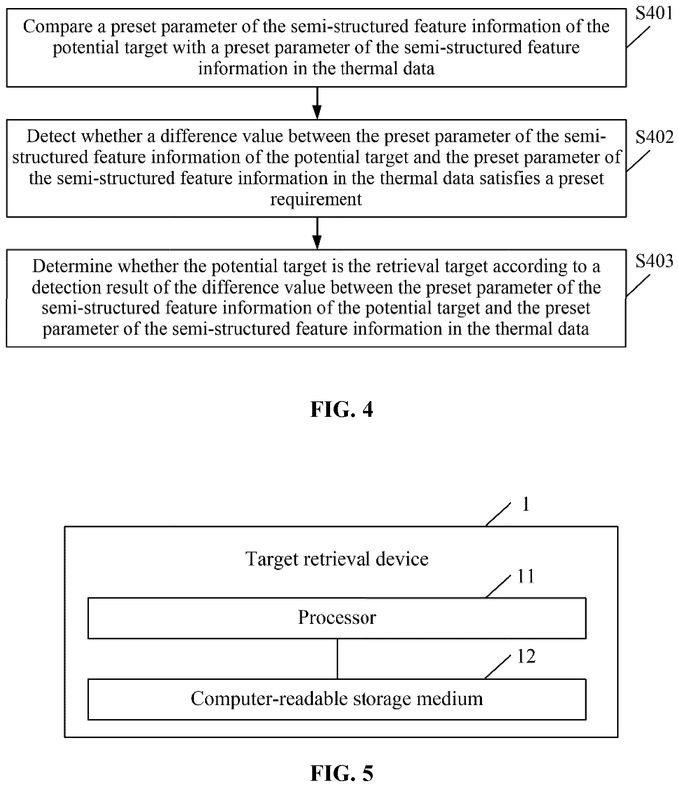

In this example embodiment of the present application, as shown in FIG. 4, comparing the semi-structured feature information of the potential target with the semi-structured feature information in the thermal data and determining whether the potential target is the retrieval target according to the comparison result includes steps S401 to S403.

In S401, a preset parameter of the semi-structured feature information of the potential target is compared with a preset parameter of the semi-structured feature information in the thermal data.

In S402, it is detected whether a difference value between the preset parameter of the semi-structured feature information of the potential target and the preset parameter of the semi-structured feature information in the thermal data satisfies a preset requirement.

In S403, whether the potential target is the retrieval target is determined according to the detection result of the difference value between the preset parameter of the semi-structured feature information of the potential target and the preset parameter of the semi-structured feature information in the thermal data. The preset parameter includes a Euclidean distance and/or a cosine distance.

In this example embodiment of the present application, whether the potential target is the retrieval target is determined according to the detection result of the difference value between the preset parameter of the semi-structured feature information of the potential target and the preset parameter of the semi-structured feature information in the thermal data in the following manner.

When the difference value between the preset parameter of the semi-structured feature information of the potential target and the preset parameter of the semi-structured feature information in the thermal data is less than a first preset threshold, it is determined that the potential target is the retrieval target. When the difference value between the preset parameter of the semi-structured feature information of the potential target and the preset parameter of the semi-structured feature information in the thermal data is greater than or equal to the first preset threshold, it is determined that the potential target is not the retrieval target.

In this example embodiment of the present application, the method also includes the steps below.

When the difference value between the preset parameter of the semi-structured feature information of the potential target and the preset parameter of the semi-structured feature information in the thermal data is less than the first preset threshold, difference values between preset parameters of the semi-structured feature information of the entire set of acquired potential targets and the preset parameter of the semi-structured feature information in the thermal data are sorted. The similarity sorting of the semi-structured feature information of the potential target and the semi-structured feature information in the thermal data is determined according to the sorting result of the difference values. The smaller a difference value is, the greater the similarity is.

In this example embodiment of the present application, the potential target appearing in the real-time video stream from a camera is analyzed to acquire a real-time feature vector (that is, the semi-structured feature information of the potential target), and the real-time feature vector is used as a retrieval request and sent to a cluster node that receives the retrieval request. This cluster node distributes the retrieval request to multiple cluster nodes in the thermal data memory cluster in parallel. Each cluster node adopts a multi-threaded approach to perform comparison and filtering (the semi-structured feature information of the potential target and the semi-structured feature information in the thermal data) within the cluster node, performs sorting according to the degree of similarity, and returns the sorting result to the cluster node that receives the retrieval request. The cluster node that receives the retrieval request performs summarization, re-sorts the similarity obtained from the comparison results, and then returns the final sorting data separately.

In this example embodiment of the present application, the solution of this embodiment of the present application analyzes the input for a structured attribute information retrieval of a user, combines historical video analysis results, and intelligently selects the corresponding semi-structured feature information. The semi-structured feature information is used as the thermal data and loaded into the thermal data memory cluster. The semi-structured feature information of the real-time video stream is compared based on the selected thermal data to implement the target alerting effect, that is, the workload of manual analysis is saved, and the real-time nature of target surveillance is improved.

Some embodiments of the present application provide a target retrieval device 1. As shown in FIG. 5, the device 1 includes a processor 11 and a computer-readable storage medium 12. The computer-readable storage medium 12 stores instructions. When being executed by the processor 11, the instructions perform the target retrieval method.

In this example embodiment of the present application, any embodiment in the preceding target retrieval method embodiments is applied to the device embodiment, and the details are not repeated here.

Some embodiments of the present application provide a computer-readable storage medium. The computer-readable storage medium stores one or more programs executable by one or more processors to enable the one or more programs to implement the target retrieval method described in any of the preceding embodiments.

It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be executed jointly by several physical components. Some or all components may be implemented as software executed by processors such as digital signal processors or microcontrollers, hardware, or integrated circuits such as application-specific integrated circuits. Such software may be distributed on a computer-readable medium, which may include a computer storage medium (or a non-transitory medium) and a communication medium (or a transitory medium). As is known to those of ordinary skill in the art, the term, computer storage medium, includes volatile and nonvolatile, removable and non-removable media implemented in any method or technology for storing information (such as computer-readable instructions, data structures, program modules or other data). The computer-storage medium includes, but is not limited to, a random access memory (RAM), a read-only memory (ROM), an electrically erasable programmable read-only memory (EEPROM), a flash memory, or other memory technologies, a compact disc read-only memory (CD-ROM), a digital versatile disc (DVD) or other optical disc storage, a magnetic cassette, a magnetic tape, disk storage or other magnetic storage apparatus, or any other medium used to store the desired information and accessible by a computer. In addition, as is known to those of ordinary skill in the art, the communication medium generally includes computer-readable instructions, data structures, program modules or other data in modulated data signals such as carriers or other transmission mechanisms, and may include any information delivery medium.

## Claims

1. A target retrieval method, comprising:
acquiring structured feature information that is input when information retrieval is performed on a preset information retrieval database;
acquiring, according to time information and range information contained in the input structured feature information, semi-structured feature information in thermal data within a first preset period and a first preset range from the information retrieval database and using the semi-structured feature information as to-be-retrieved thermal data;
acquiring a real-time video stream of a camera within a second preset period and a second preset range;
acquiring semi-structured feature information of a potential target in the real-time video stream; and
comparing the semi-structured feature information of the potential target with the semi-structured feature information in the thermal data and determining whether the potential target is a retrieval target according to a comparison result.

2. The target retrieval method according to claim 1, wherein a method for pre-acquiring the information retrieval database comprises:
acquiring shot videos of a complete set of cameras in a preset occasion;
positioning and classifying a totality of preset objects in the shot videos and acquiring an image of each preset object among the totality of preset objects, wherein the preset objects comprise at least one of persons and vehicles;
performing feature vector extraction on images of the totality of preset objects to acquire semi-structured feature information of the totality of preset objects;
performing structured analysis on the semi-structured feature information of the totality of preset objects to acquire structured feature information of the totality of preset objects; and
storing, in a preset database, the semi-structured feature information and the structured feature information of the totality of preset objects in correspondence with the preset objects to acquire the information retrieval database.

3. The target retrieval method according to claim 1, wherein the first preset period comprises at least one of an incident period and a pre-incident period, and the first preset range comprises at least one of an incident range and a range within a preset distance outside the incident range; and
acquiring, according to the time information and the range information contained in the input structured feature information, the semi-structured feature information within the first preset period and the first preset range from the information retrieval database comprises:
determining a to-be-searched first preset period and a to-be-searched first preset range according to the incident period and the incident range contained in the input structured feature information, wherein the first preset period comprises at least one of a first preset sub-period and a second preset sub-period; and the first preset range comprises at least one of a first preset sub-range and a second preset sub-range; and
acquiring at least one of the following: a totality of semi-structured feature information in a first shot video within the first preset sub-period and the first preset sub-range, and a totality of semi-structured feature information in a second shot video within the second preset sub-period and the second preset sub-range,
wherein a duration difference between the first preset sub-period and the incident period is less than a duration difference between the second preset sub-period and the incident period; and a distance difference between the first preset sub-range and the incident range is less than a distance difference between the second preset sub-range and the incident range.

4. The target retrieval method according to claim 1, wherein acquiring the semi-structured feature information of the potential target in the real-time video stream comprises:
positioning the potential target in the real-time video stream and acquiring an image of each potential target, wherein the potential target comprises at least one of a person and a vehicle; and
performing feature vector extraction on the image of each potential target and acquiring the semi-structured feature information of the potential target.

5. The target retrieval method according to claim 1, wherein comparing the semi-structured feature information of the potential target with the semi-structured feature information in the thermal data and determining whether the potential target is the retrieval target according to the comparison result comprise:
comparing a preset parameter of the semi-structured feature information of the potential target with a preset parameter of the semi-structured feature information in the thermal data;
detecting whether a difference value between the preset parameter of the semi-structured feature information of the potential target and the preset parameter of the semi-structured feature information in the thermal data satisfies a preset requirement; and
determining whether the potential target is the retrieval target according to a detection result of the difference value between the preset parameter of the semi-structured feature information of the potential target and the preset parameter of the semi-structured feature information in the thermal data,
wherein the preset parameter comprises at least one of a Euclidean distance and a cosine distance.

6. The target retrieval method according to claim 5, wherein determining whether the potential target is the retrieval target according to the detection result of the difference value between the preset parameter of the semi-structured feature information of the potential target and the preset parameter of the semi-structured feature information in the thermal data comprises:
in response to the difference value between the preset parameter of the semi-structured feature information of the potential target and the preset parameter of the semi-structured feature information in the thermal data being less than a first preset threshold, determining that the potential target is the retrieval target; and
in response to the difference value between the preset parameter of the semi-structured feature information of the potential target and the preset parameter of the semi-structured feature information in the thermal data being greater than or equal to the first preset threshold, determining that the potential target is not the retrieval target.

7. The target retrieval method according to claim 6, wherein the target retrieval method further comprises:
in response to the difference value between the preset parameter of the semi-structured feature information of the potential target and the preset parameter of the semi-structured feature information in the thermal data being less than the first preset threshold, sorting difference values between preset parameters of semi-structured feature information of a totality of acquired potential targets and the preset parameter of the semi-structured feature information in the thermal data; and
determining similarity sorting of the semi-structured feature information of the potential target and the semi-structured feature information in the thermal data according to a sorting result of the difference values, wherein the smaller a difference value is, the greater a similarity between the semi-structured feature information of the potential target and the semi-structured feature information in the thermal data is.

8. The target retrieval method according to any one of claims 1 to 7, wherein a method for loading the thermal data into a preset thermal data memory cluster comprises:
starting from thermal data of a latest date and loading the thermal data among a plurality of different cluster nodes successively in a polling manner until a totality of cluster nodes are loaded up to an upper memory limit; and
after an image that is newly added to the information retrieval database and satisfies a shot video within the first preset period and the first preset range is added to the information retrieval database for first preset duration, loading semi-structured feature information corresponding to the newly added image into the thermal data memory cluster, wherein the first preset duration is a positive integer multiple λ of a time period T1, and the time period T1 is a time period required from acquiring the newly added image to completing structuralization of the newly added image.

9. The target retrieval method according to any one of claims 1 to 7, wherein the target retrieval method further comprises:
in response to the input structured feature information containing a color of the retrieval target and the color of the retrieval target being covered by a light color in an environment, acquiring environmental light color information of the complete set of cameras, and expanding the input color of the retrieval target to a primary color and a possible color according to a preset solution; and
using semi-structured feature information of an image corresponding to a retrieved and expanded color of the retrieval target in the information retrieval database as the thermal data and adding the semi-structured feature information to a preset thermal data memory cluster.

10. A target retrieval device, comprising a processor and a computer-readable storage medium, wherein the computer-readable storage medium stores instructions, and when being executed by the processor, the instructions perform the target retrieval method according to any one of claims 1 to 9.

11. A computer-readable storage medium, storing at least one program, wherein when being executed by at least one processor, the at least one program performs the target retrieval method according to any one of claims 1 to 9.
